# EUROPEAN PATENT SPECIFICATION

(11) **EP 2 697 441 B1**
(45) Date of publication and mention of the grant of the patent: **19.07.2017**
(21) Application number: 11863392.4
(22) Date of filing: 15.04.2011
(51) Int. Cl.: E02F 9/22, B60W 30/20, F15B 21/04, F02D 29/04, F15B 21/00, E02F 9/20

(54) **METHOD AND DEVICE FOR REDUCING VIBRATIONS IN A WORKING MACHINE**
VERFAHREN UND VORRICHTUNG ZUR VIBRATIONSMINDERUNG BEI EINER ARBEITSMASCHINE
PROCÉDÉ ET DISPOSITIF DE RÉDUCTION DES VIBRATIONS DANS UN ENGIN DE TRAVAUX

(43) Date of publication of application: 19.02.2014
(73) Proprietor: Volvo Construction Equipment AB, 631 85 Eskilstuna (SE)
(72) Inventor: VIGHOLM, Bo, 640 40 Stora Sundby (SE); KARLSSON, Jan, 635 06 Eskilstuna (SE)
(74) Representative: Volvo Technology Corporation
(86) International application number: PCT/SE2011/000070
(87) International publication number: WO 2012/141623

(56) References cited:
- EP-A1- 0 844 337
- EP-A1- 1 703 101
- GB-A- 2 442 177
- US-A- 5 967 756
- US-A1- 2004 076 502
- US-A1- 2005 011 190
- US-A1- 2010 095 835

## Description

### TECHNICAL FIELD

The invention relates to a method for reducing vibrations in a working machine according to the preamble of claim 1.

The invention is applicable on working machines within the fields of industrial construction machines, in particular wheel loaders. Although the invention will be described hereinafter with respect to a wheel loader, the invention is not restricted to this particular machine, but may also be used in other heavy working machines, such as articulated haulers, dump trucks, graders, excavators or other construction equipment.

### BACKGROUND OF THE INVENTION

A working machine is provided with a bucket, container or other type of implement for digging, lifting, carrying and/or transporting a load.

For example, a wheel loader has a load arm unit for raising and lowering an implement, such as a bucket. The load arm unit comprises a number of hydraulic cylinders for movement of a load arm and the implement attached to the load arm. A pair of hydraulic cylinders is arranged for lifting the load arm and a further hydraulic cylinder is arranged for tilting the implement relative to the load arm.

In addition to the hydraulic cylinders, the hydraulic system of the wheel loader comprises at least one pump for providing hydraulic fluid to the hydraulic cylinders of the load arm unit.

The hydraulic system of a wheel loader is usually a so called load sensing system (LS system). This means that the pump which provides the hydraulic system with hydraulic fluid receives a signal representing the current load pressure of a hydraulic cylinder in operation. The pump is controlled to provide a pressure which somewhat exceeds the load pressure of the hydraulic cylinder. Hereby a flow of hydraulic fluid to the current hydraulic cylinder is created.

In a hydraulic system, such as a LS system, a certain speed and displacement of the hydraulic pump may give rise to waves, such as acoustic waves, pulsations in the hydraulic fluid and/or vibrations in mechanical components, which in turn can give rise to unwanted vibrations in a working machine. Since the flow of hydraulic fluid to the working functions of the working machine is determined by the demanded speed of the implement associated with the current working function, such a speed demand may cause the pump to be driven with a speed and displacement that in turn will cause waves at a resonance frequency. Also auxiliary equipment driven by the hydraulic system, such as a cooling fan, may give rise to resonance frequency waves.

According to its abstract, GB 2 442 177 A discloses a control device for a hydraulically driven fan has a cooling fan driven by a hydraulic motor and blowing air to cool operation fluid, a sensor for detecting the temperature of the operation fluid, and a lever switch for detecting, by determining whether a working machine lever is operated, whether a working mechanism operated by an engine is stopped. In order that resonance between the cooling fan and the engine is suppressed, the control device for the hydraulically driven fan regulates the rotation speed of the hydraulic motor according to the detection result of the lever switch.

According to its abstract, US 2005/0011190 A1 discloses a suspension for the boom of a loading vehicle includes a hydraulic cylinder for raising and lowering, or for extending and retracting (in the case of a telescopic cylinder), a boom. A direction control valve is provided for selectively routing hydraulic oil to and from at least a head-end chamber of the cylinder. A position sensor senses the position of the hydraulic piston rod, at the start of operation, and sends a sends a target signal representing this beginning position to a control unit which determines the difference between the target signal and a signal representing a current position of the piston rod.

### SUMMARY OF THE INVENTION

An object of the invention is to provide a method defined by way of introduction, by which method vibrations due to resonance frequency waves in a working machine can be reduced.

This object is achieved by a method according to claim 1.

The invention is based on the insight that a hydraulic system, for example a hydraulic system of the load sensing type, can give rise to waves for a certain speed of the hydraulic pump. Such waves in turn can give rise to unwanted vibrations. By the provision of a method comprising the steps of identifying a resonance frequency for the working machine and controlling the drive source, preferably an electric motor, so as to counteract waves with the resonance frequency, unwanted vibrations in the working machine can be reduced or avoided.

The invention also relates to a device for reducing vibrations in a working machine according to claim 18.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a lateral view illustrating a wheel loader having a bucket for loading operations, and a hydraulic system for operating the bucket and steering the wheel loader,
Fig. 2 is a schematic block diagram illustrating the method according to the invention, and
Fig. 3 is a schematic illustration of a working machine, and a hydraulic system of a working machine to which the method according to the invention can be applied.

### DETAILED DESCRIPTION OF EXAMPLE EMBODIMENTS OF THE INVENTION

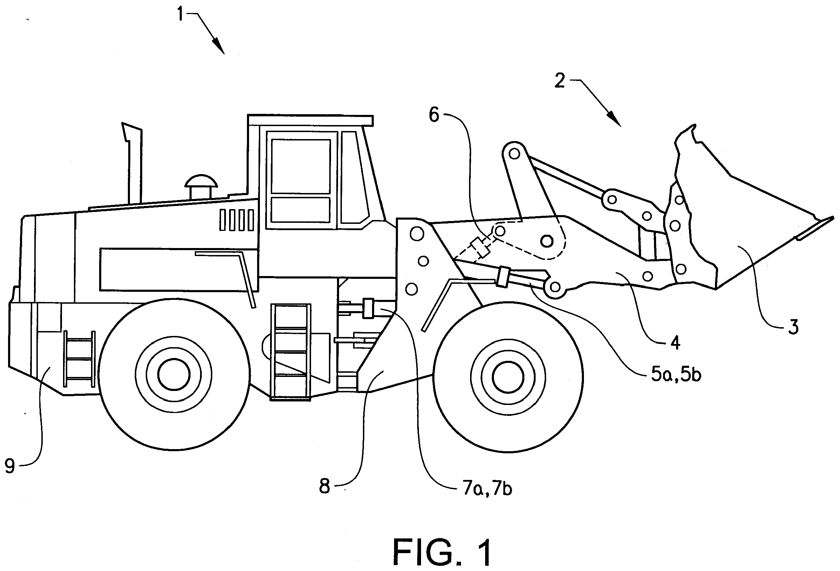

Figure 1 is an illustration of a working machine 1 in the form of a wheel loader having an implement 2. The term "implement" is intended to comprise any kind of tool using hydraulics, such as a bucket, a fork or a gripping tool arranged on a wheel loader, or a container arranged on an articulated hauler. The implement illustrated is a bucket 3 which is arranged on an arm unit 4 for lifting and lowering the bucket 3, and further the bucket 3 can be tilted relative to the arm unit 4. The wheel loader 1 is provided with a hydraulic system comprising at least one hydraulic machine (not shown in Fig. 1). The hydraulic machine can be a hydraulic pump, although it is preferred that the hydraulic machine can work as a hydraulic pump as well as a hydraulic motor with a reversed flow of hydraulic fluid. Such a hydraulic machine with said both functions can be used as a pump for providing the hydraulic system with hydraulic fluid, for example to lift and tilt the bucket, and as a hydraulic motor for recuperation of energy, for example during a lowering operation of the implement 2. In the example embodiment illustrated in figure 1 the hydraulic system comprises two hydraulic cylinders 5a, 5b for the operation of the arm unit 4 and a hydraulic cylinder 6 for tilting the bucket relative to the arm unit 4. Furthermore the hydraulic system comprises two hydraulic cylinders 7a, 7b arranged on opposite sides of the wheel loader for turning the wheel loader by means of relative movement of a front body part 8 and a rear body part 9. In other words; the working machine is frame-steered by means of the steering cylinders 7a, 7b.

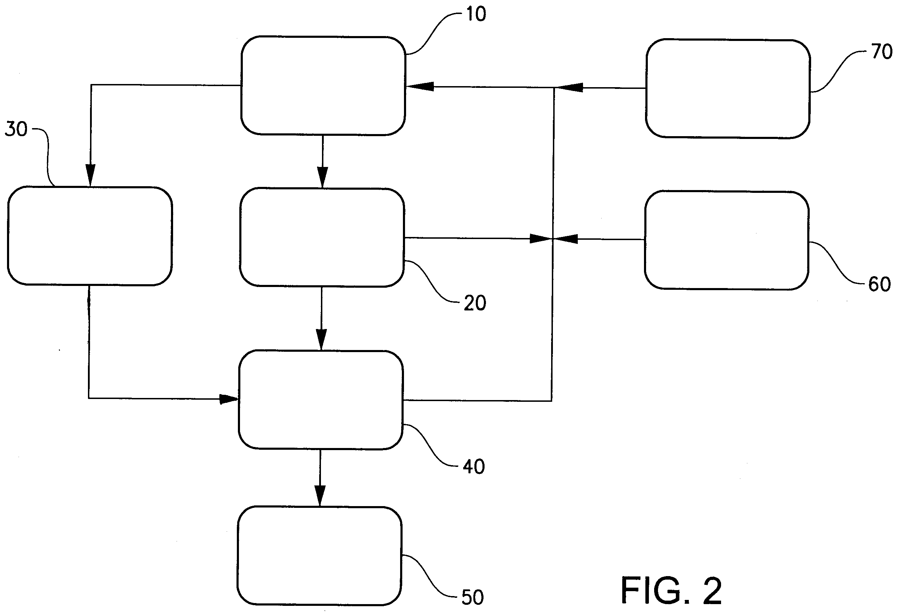

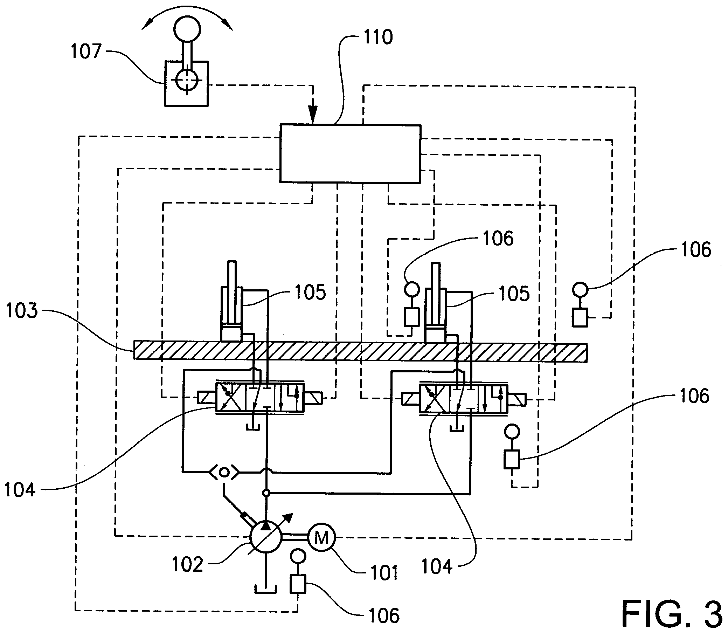

The method for reducing vibrations in a working machine according to the invention will hereinafter be described with reference to Figs. 2 and 3. In Fig. 2 a schematic block diagram is illustrated. This block diagram shows how the system can work to identify a resonance frequency for the working machine, and control the electric motor so as to counteract waves with the resonance frequency.

At 10 in Fig. 2 a sensor detects an unwanted frequency. The sensor is preferably connected to a control unit for communication of signals from the sensor to the control unit. At 10 a signal is also sent from the control unit to a drive source, hereinafter exemplified by an electric motor, driving a hydraulic pump in order to adjust the rotation speed thereof. At 20 in Fig. 2 the rotation speed of the electric motor is controlled, preferably by a computer program in accordance with a computer model so as to counteract the unwanted frequency. In addition, if the displacement of a pump driven by the electric motor is controllable, a signal is sent from the control unit to the pump for adjusting the displacement based on the adjustment of the rotation speed of the electric motor. In addition or alternatively, the opening of a valve arranged between the pump and a consumer to be supplied by the pump can be changed. At 30 the displacement of the pump and/or the valve opening is changed. For example, if the speed of rotation of the electric machine has been increased at 20 the displacement is decreased at 30 in order to maintain the flow of hydraulic fluid at 40. Thus a consumer at 50 will receive substantially the same flow though the speed of rotation of the electric motor has been changed.

In an alternative embodiment of the invention the control of the pump and/or the valve at 30 is omitted. This will however result in a changed flow in comparison to the flow before the change of the rotation speed of the electric motor, and thus a change of the function of the consumer.

Although one or more sensors arranged on the working machine are preferably used for identifying the resonance frequency of the working machine, in another embodiment of the invention the frequency to be avoided can be a known in advance and/or by calculation. For example, when using a piston pump a predetermined resonance frequency could be identified by a calculation based on the number of pistons and the rotation speed of the pump motor. In an embodiment where the sensor is omitted and the control of the electric motor is based on already known frequencies to be avoided, it is important that the control unit receives signals corresponding to the current speed of rotation of the electric motor and the flow of hydraulic fluid at 40 in order to avoid a resonance frequency or a resonance frequency interval. In addition to the pressure drop over a valve and the opening area of the valve, information about the temperature and viscosity of the hydraulic fluid is preferably transferred to the control unit, as indicated at 60 and 70, which can be useful in order to calculate the hydraulic flow.

Fig. 3 is a schematic illustration of a working machine, and a hydraulic system of a working machine to which the method can be applied. The working machine comprises a body 103 and the hydraulic system is arranged on the body 103. The hydraulic system comprises a hydraulic machine 102, preferably a pump having an adjustable displacement, driven by a drive source 101 for providing hydraulic fluid to at least one working function 105. Although the drive source is exemplified by an electric motor 101, another drive source could also possible be used, such as for example a hydraulic drive source. The drive source can be controlled so as to counteract waves with the resonance frequency. The drive source has preferably a variable rotation of speed, and the speed can preferably be varied independently of the rotation speed of the propulsion engine of the working machine.

A control valve 104 is arranged between the pump 102 and the working function or consumer 105. As also illustrated in Fig. 3, one or more sensors 106 can be arranged at different positions of the working machine for identifying a resonance frequency. The measuring can be performed for the hydraulic system of the working machine or another component of the working machine. In the embodiment illustrated in Fig. 3 the sensors 106 are acoustic sensors arranged on the body 103 of the working machine, the pump 102, the valve 104, and on a hydraulic cylinder of the working function 105, for measuring vibrations and/or sound. It should however be stressed that also other sensors can be used in some cases. For example, a sensor for measuring the pressure of the hydraulic fluid in the hydraulic system or a strain gauge arranged on a component of the hydraulic system or the body of the working machine.

By controlling the electric motor so as to counteract waves with the resonance frequency, vibrations can be reduced. This can be performed by changing the speed of rotation of the electric motor 101. The speed of rotation, i.e. the number of revolutions per unit time, can be increased or decreased depending on the current frequency to be avoided, the speed of rotation interval of the motor, and depending on demands for flow of hydraulic fluid to the working function 105 or consumer, etc. In order to compensate for the changed rotation of speed of the electric motor 101 the displacement of the hydraulic machine 102 can be changed so as to keep the hydraulic flow to the working function 105 substantially unchanged.

For example, the hydraulic pump 102 (130 cc and 7 pistons as an example) may have a rotation speed of 2000 rpm which gives piston pressure pulses with the frequency 233 Hz (2000/60*7). The theoretical maximal flow is 260 l/min (2000*130/1000). Suppose the current displacement of the pump is 50% of maximum, this will give a maximal flow of 130 l/min. In case an acoustic sensor 106 detects a resonance frequency in the hydraulic system that can be derived from the piston pressure pulses (233 Hz), the control unit 110 can change the rotation speed of the electric motor to 1800 rpm, for instance, so as to counteract the resonance frequency. The piston pressure pulses will then arise with the frequency 210 Hz (1800/60*7). In order to maintain the flow to the working function 105 supplied by the pump, the current displacement of the pump is increased from 50 to 55.5 % (0.5*2000/1800).

Correspondingly, in a case where the rotation speed of the electric motor is increased the flow can be maintained by decreasing the current displacement.

According to an alternative embodiment an increased rotation of speed of the electric motor can be compensated for by draining hydraulic fluid from the hydraulic machine to a hydraulic tank so as to keep the hydraulic flow to the working function substantially unchanged.

As regards a resonance frequency that can be derived from the design of the hydraulic machine itself, such as a piston pump having a certain number of pistons which give rise to piston pressure pulses occurring with a given frequency depending on the rotation speed of the electric motor, in an alternative embodiment of the invention the rotation speed of the electric motor during one and the same rotation axis revolution of the electric motor can be varied. By varying the speed of rotation during one and the same rotation axis revolution the affect of the piston pressure pulses can be reduced at the same time as the total flow per revolution can be maintained. Hereby the resonance frequency and vibrations can be counteracted.

The method according to the invention can be used together with a certain working operation performed by means of the working function. A limitation on the speed rotation of the electric motor can be introduced during performance of said working operation so as to counteract or avoid waves with an unwanted resonance frequency. For example, an upper limitation on the speed rotation of the electric motor can be introduced. Hereby the speed of the working function used is also reduced, unless the displacement of the pump is changed for keeping the hydraulic flow unchanged. Such a limitation and control of the electric motor can be introduced by manipulating electrical signals from one or more operator levers 107 provided for manoeuvring the working function.

In another embodiment of the invention, a limitation on the output torque of the electric motor is introduced during performance of said working operation. In order to maintain the requisite pressure demanded by the working function the displacement of the pump has to be decreased which in turn implies that the hydraulic flow will decrease for a certain speed of rotation. A further pump can be used to maintain the flow and the speed of the working function. At the same time, the unwanted piston pressure pulsations can be reduced due to the decreased displacement of the first pump and/or by the fact that the further pump affects the pulsations in the hydraulic system.

The invention also relates to a device for reducing vibrations in a working machine. The device comprises a means for identifying a resonance frequency for the working machine, and a means for controlling the drive source so as to counteract waves with the resonance frequency. The identifying means can be any of the means already described hereinabove, such as an acoustic sensor for instance. The means for controlling the drive source, preferably an electric motor, can be a control unit having a computer program with code means, and this control unit can be constituted by the main control unit 110 for controlling the hydraulic system or be an integrated part thereof or be constituted by an additional separate control unit.

It is to be understood that the present invention is not limited to the embodiments described above and illustrated in the drawings; rather, the skilled person will recognize that many changes and modifications may be made within the scope of the appended claims.

## Claims

1. A method for reducing vibrations in a working machine, the working machine comprising a hydraulic system with a hydraulic machine (102) for providing hydraulic fluid to at least one working function (105), the hydraulic machine being driven by a drive source (101) having a variable speed of rotation, **characterized by** identifying a resonance frequency for the working machine, and controlling the drive source (101) so as to counteract waves with the resonance frequency.

2. A method according to claim 1, **characterized by** controlling the drive source (101) by changing the speed of rotation of the drive source.

3. A method according to claim 2, **characterized by** controlling the drive source (101) by increasing the speed of rotation of the drive source.

4. A method according to claim 2, **characterized by** controlling the drive source (101) by decreasing the speed of rotation of the drive source.

5. A method according to any of claims 2-4, **characterized by** compensating for the changed rotation of speed of the drive source (101) by changing the displacement of the hydraulic machine (102) so as to keep the hydraulic flow to the working function (105) substantially unchanged.

6. A method according to claim 3, **characterized by** compensating for the increased rotation of speed of the drive source (101) by draining hydraulic fluid from the hydraulic machine (102) to a hydraulic tank so as to keep the hydraulic flow to the working function (105) substantially unchanged.

7. A method according to claim 2, **characterized by** varying the speed of rotation of the drive source (101) during one and the same rotation axis revolution of the drive source.

8. A method according to claim 1, **characterized by** introducing a limitation on the speed rotation of the drive source (101) during performance of a certain working operation.

9. A method according to claim 8, **characterized by** introducing an upper limitation on the speed rotation of the drive source (101).

10. A method according to claim 1 , **characterized by** introducing a limitation on the output torque of the drive source (101) during performance of a certain working operation.

11. A method according to any of claims 8-10, **characterized by** using said working function for performance of the working operation.

12. A method according to any preceding claim, **characterized by** controlling the drive source (101) by manipulating electrical signals from one or more operator input means (107) provided for manoeuvring the working function.

13. A method according to any preceding claim, **characterized by** identifying the resonance frequency by using one or more sensors arranged on the working machine.

14. A method according to claim 13, **characterized by** sensing the resonance frequency by using one or more acoustic sensors.

15. A method according to any preceding claim, **characterized by** identifying the resonance frequency for the hydraulic system of the working machine.

16. A method according to any preceding claim, **characterized by** the drive source being an electric motor (101).

17. A method according to any preceding claim, **characterized by** controlling the drive source (101) independently of the speed of rotation of a propulsion engine of the working machine.

18. A device for reducing vibrations in a working machine, the working machine comprising a hydraulic system with a hydraulic machine (102) for providing hydraulic fluid to at least one working function, the hydraulic machine being arranged to be driven by a drive source (101), **characterized in that** the device comprises a means (106) for identifying a resonance frequency for the working machine, and a means (110) for controlling the drive source (101) so as to counteract waves with the resonance frequency.

19. A device according to claim 18, **characterized in that** said control means (110) is arranged for controlling the drive source constituted by an electric motor (101).

20. A working machine comprising a device according to claim 18 or 19.

21. A computer program comprising code means for performing the steps of any of claims 1 - 17 when said program is run on a computer.

22. A computer readable medium comprising a computer program according to claim 21.

## Patentansprüche

1. Verfahren zum Reduzieren von Vibrationen bei einer Arbeitsmaschine, wobei die Arbeitsmaschine ein Hydrauliksystem mit einer Hydraulikmaschine (102) umfasst, um wenigstens einer Arbeitsfunktion (105) Hydraulikfluid zuzuführen, wobei die Hydraulikmaschine von einer Antriebsquelle (101) angetrieben wird, die eine variable Drehzahl hat, **dadurch gekennzeichnet, dass** eine Resonanzfrequenz für die Arbeitsmaschine identifiziert wird und die Antriebsquelle (101) so gesteuert wird, dass Wellen mit der Resonanzfrequenz entgegengewirkt wird.

2. Verfahren nach Anspruch 1, **dadurch gekennzeichnet, dass** die Antriebsquelle (101) durch Ändern der Drehzahl der Antriebsquelle gesteuert wird.

3. Verfahren nach Anspruch 2, **dadurch gekennzeichnet, dass** die Antriebsquelle (101) durch Erhöhen der Drehzahl der Antriebsquelle gesteuert wird.

4. Verfahren nach Anspruch 2, **dadurch gekennzeichnet, dass** die Antriebsquelle (101) durch Verringern der Drehzahl der Antriebsquelle gesteuert wird.

5. Verfahren nach einem der Ansprüche 2 bis 4, **dadurch gekennzeichnet, dass** die geänderte Drehzahl der Antriebsquelle (101) kompensiert wird, indem die Verstellung der Hydraulikmaschine (102) geändert wird, um den hydraulischen Strom zu der Arbeitsfunktion (105) im Wesentlichen unverändert zu halten.

6. Verfahren nach Anspruch 3, **dadurch gekennzeichnet, dass** die erhöhte Drehzahl der Antriebsquelle (101) kompensiert wird, indem Hydraulikfluid aus der Hydraulikmaschine (102) in einen Hydrauliktank entleert wird, um den hydraulischen Strom zu der Arbeitsfunktion (105) im Wesentlichen unverändert zu halten.

7. Verfahren nach Anspruch 2, **dadurch gekennzeichnet, dass** die Drehzahl der Antriebsquelle (101) während ein und derselben Drehachsenumdrehung der Antriebsquelle variiert wird.

8. Verfahren nach Anspruch 1, **dadurch gekennzeichnet, dass** eine Begrenzung der Drehzahl der Antriebsquelle (101) während der Durchführung eines bestimmten Arbeitsvorgangs eingeführt wird.

9. Verfahren nach Anspruch 8, **dadurch gekennzeichnet, dass** eine obere Begrenzung der Drehzahl der Antriebsquelle (101) eingeführt wird.

10. Verfahren nach Anspruch 1, **dadurch gekennzeichnet, dass** eine Begrenzung des Ausgangsdrehmoments der Antriebsquelle (101) während der Durchführung eines bestimmten Arbeitsvorgangs eingeführt wird.

11. Verfahren nach einem der Ansprüche 8 bis 10, **dadurch gekennzeichnet, dass** die Arbeitsfunktion für die Durchführung des Arbeitsvorgangs verwendet wird.

12. Verfahren nach einem der vorhergehenden Ansprüche, **dadurch gekennzeichnet, dass** die Antriebsquelle (101) gesteuert wird, indem elektrische Signale von einem oder mehreren für ein Lenken der Arbeitsfunktion vorgesehenen Bediener-Eingabemitteln (107) manipuliert werden.

13. Verfahren nach einem der vorhergehenden Ansprüche, **dadurch gekennzeichnet, dass** die Resonanzfrequenz identifiziert wird, indem ein oder mehrere an der Arbeitsmaschine angeordnete Sensoren verwendet werden.

14. Verfahren nach Anspruch 13, **dadurch gekennzeichnet, dass** die Resonanzfrequenz erfasst wird, indem ein oder mehrere akustische Sensoren verwendet werden.

15. Verfahren nach einem der vorhergehenden Ansprüche, **dadurch gekennzeichnet, dass** die Resonanzfrequenz für das Hydrauliksystem der Arbeitsmaschine identifiziert wird.

16. Verfahren nach einem der vorhergehenden Ansprüche, **dadurch gekennzeichnet, dass** die Antriebsquelle ein elektrischer Motor (101) ist.

17. Verfahren nach einem der vorhergehenden Ansprüche, **dadurch gekennzeichnet, dass** die Antriebsquelle (101) unabhängig von der Drehzahl eines Antriebsmotors der Arbeitsmaschine gesteuert wird.

18. Vorrichtung zur Reduzierung von Vibrationen in einer Arbeitsmaschine, wobei die Arbeitsmaschine ein Hydrauliksystem mit einer Hydraulikmaschine (102) umfasst, um wenigstens einer Arbeitsfunktion Hydraulikfluid zuzuführen, wobei die Hydraulikmaschine dafür vorgesehen ist, von einer Antriebsquelle (101) angetrieben zu werden, **dadurch gekennzeichnet, dass** die Vorrichtung ein Mittel (106) zum Identifizieren einer Resonanzfrequenz für die Arbeitsmaschine und ein Mittel (110) zum Steuern der Antriebsquelle (101) umfasst, um Wellen mit der Resonanzfrequenz entgegenzuwirken.

19. Vorrichtung nach Anspruch 18, **dadurch gekennzeichnet, dass** das Steuerungsmittel (110) dafür vorgesehen ist, die Antriebsquelle zu steuern, die von einem Elektromotor (101) gebildet wird.

20. Arbeitsmaschine, umfassend eine Vorrichtung nach Anspruch 18 oder 19.

21. Computerprogramm, umfassend ein Codemittel zum Durchführen der Schritte eines der Ansprüche 1 bis 17, wenn das Programm auf einem Computer ausgeführt wird.

22. Computerlesbares Medium, umfassend ein Computerprogramm nach Anspruch 21.

## Revendications

1. Procédé pour réduire des vibrations dans un engin de travaux, l'engin de travaux comprenant un système hydraulique doté d'une machine hydraulique (102) pour fournir un fluide hydraulique à au moins une fonction de travail (105), la machine hydraulique étant entraînée par une source d'entraînement (101) ayant une vitesse de rotation variable, **caractérisé par** le fait d'identifier une fréquence de résonance pour l'engin de travaux et commander la source d'entraînement (101) de manière à contrecarrer les ondes à la fréquence de résonance.

2. Procédé selon la revendication 1, **caractérisé par** le fait de commander la source d'entraînement (101) en changeant la vitesse de rotation de la source d'entraînement.

3. Procédé selon la revendication 2, **caractérisé par** le fait de commander la source d'entraînement (101) en augmentant la vitesse de rotation de la source d'entraînement.

4. Procédé selon la revendication 2, **caractérisé par** le fait de commander la source d'entraînement (101) en diminuant la vitesse de rotation de la source d'entraînement.

5. Procédé selon l'une des revendications 2 à 4, **caractérisé par** le fait de compenser la vitesse de rotation changée de la source d'entraînement (101) en changeant la cylindrée de la machine hydraulique (102) de manière à maintenir l'écoulement hydraulique vers la fonction hydraulique (105) essentiellement inchangé.

6. Procédé selon la revendication 3, **caractérisé par** le fait de compenser la vitesse de rotation accrue de la source d'entraînement (101) en évacuant le fluide hydraulique depuis la machine hydraulique (102) vers un réservoir hydraulique de manière à maintenir l'écoulement hydraulique vers la fonction de travail (105) essentiellement inchangé.

7. Procédé selon la revendication 2, **caractérisé par** le fait de faire varier la vitesse de rotation de la source d'entraînement (101) au cours d'une seule et même révolution d'axe de rotation de la source d'entraînement.

8. Procédé selon la revendication 1, **caractérisé par** le fait d'introduire une limitation sur la vitesse de rotation de la source d'entraînement (101) au cours d'une réalisation d'une certaine opération de travail.

9. Procédé selon la revendication 8, **caractérisé par** le fait d'introduire une limitation supérieure sur la vitesse de rotation de la source d'entraînement (101).

10. Procédé selon la revendication 1, **caractérisé par** le fait d'introduire une limitation sur le couple de sortie de la source d'entraînement (101) au cours de la réalisation d'une certaine opération de travail.

11. Procédé selon l'une des revendications 8 à 10, **caractérisé par** le fait d'utiliser ladite fonction de travail pour la réalisation de l'opération de travail.

12. Procédé selon l'une des revendications précédentes, **caractérisé par** le fait de commander la source d'entraînement (101) en manipulant des signaux électriques provenant d'un ou de plusieurs moyen(s) d'entrée d'opérateur (107) prévu(s) pour manoeuvrer la fonction de travail.

13. Procédé selon l'une des revendications précédentes, **caractérisé par** le fait d'identifier la fréquence de résonance en utilisant un ou plusieurs détecteur(s) agencé(s) sur l'engin de travaux.

14. Procédé selon la revendication 13, **caractérisé par** le fait de détecter la fréquence de résonance en utilisant un ou plusieurs détecteur(s) acoustique(s).

15. Procédé selon l'une des revendications précédentes, **caractérisé par** le fait d'identifier la fréquence de résonance pour le système hydraulique de l'engin de travaux.

16. Procédé selon l'une des revendications précédentes, **caractérisé en ce que** la source d'entraînement est un moteur électrique (101).

17. Procédé selon l'une des revendications précédentes, **caractérisé par** le fait de commander la source d'entraînement (101) indépendamment de la vitesse de rotation d'un moteur de propulsion de l'engin de travaux.

18. Dispositif pour réduire des vibrations dans un engin de travaux, l'engin de travaux comprenant un système hydraulique doté d'une machine hydraulique (102) pour fournir du fluide hydraulique à au moins une fonction de travail, la machine hydraulique étant agencée pour être entraînée par une source d'entraînement (101), **caractérisé en ce que** le dispositif comprend un moyen (106) pour identifier une fréquence de résonance pour l'engin de travaux, et un moyen (110) pour commander la source d'entraînement (101) de manière à contrecarrer les ondes à la fréquence de résonance.

19. Dispositif selon la revendication 18, **caractérisé en ce que** ledit moyen de commande (110) est agencé pour commander la source d'entraînement constituée par un moteur électrique (101).

20. Machine de travail comprenant un dispositif selon la revendication 18 ou 19.

21. Programme informatique comprenant un moyen de code pour réaliser les étapes de l'une des revendications 1 à 17 lorsque ledit programme est exécuté sur un ordinateur.

22. Support lisible par ordinateur comprenant un programme informatique selon la revendication 21.
